# EUROPÄISCHE PATENTANMELDUNG

(11) **EP 0 883 985 A2**
(43) Veröffentlichungstag der Anmeldung: **16.12.1998**
(21) Anmeldenummer: 98110796.4
(22) Anmeldetag: 12.06.1998
(51) Int. Cl.: A01F 15/00

(54) **Landwirtschaftliche Erntemaschine**

(30) Priorität: 14.06.1997 DE 19725304
(71) Anmelder: SAME DEUTZ-FAHR S.P.A., 24047 Treviglio (Bergamo) (IT)
(72) Erfinder: Lepparz, Frank, D-86150 Augsburg (DE)
(74) Vertreter: Quinterno, Giuseppe

(57) **Zusammenfassung**

Die Erfindung betrifft eine landwirtschaftliche Erntemaschine, insbesondere Großballenpresse, mit mindestens einer Tragachse und mindestens einer Aufnahme- und Preßeinrichtung, die einen Preßraum für Großballen und einen von unten in den Preßraum mündenden Ladekanal mit einer Ladeeinrichtung aufweist. Großballenpressen werden in selbstfahrender oder gezogener Ausführung gebaut. Nachteilig ist ihr relativ hoher Preis.

Dieser Nachteil wird dadurch minimiert, daß die landwirtschaftliche Erntemaschine einen Grundmodul aufweist, der durch Anbau entsprechender Zusatzteile entweder zu einer gezogenen oder zu einer selbstfahrenden Großballenpresse ausbaubar ist.

## Beschreibung

Die Erfindung betrifft eine landwirtschaftliche Erntemaschine, insbesondere nach dem Oberbegriff des Patentanspruchs 1.

Großballenpressen werden in selbstfahrender oder gezogener Ausführung gebaut. Erstere sind vor allem für Großbetriebe und Maschinenringe interessant, während letztere eher für mittlere Betriebe in Frage kommen, für die sich eine selbstfahrende Großballenpresse nicht lohnt, die aber über eine hinreichend leistungsfähige Zugmaschine für eine gezogene Großballenpresse verfügen.

Um die Herstellkosten der Großballenpressen niedrig zu halten, ist es sinnvoll, daß beide Ausführungen eine größtmögliche Anzahl von Gleichteilen aufweisen. Dies zu erreichen ist Aufgabe der Erfindung.

Die Aufgabe wird dadurch gelöst, daß die landwirtschaftliche Erntemaschine einen Grundmodul aufweist, der durch Anbau entsprechender Zusatzteile entweder zu einer gezogenen oder zu einer selbstfahrenden Großballenpresse ausbaubar ist. Der Grundmodul umfaßt alle Gleichteile beider Ausführungen. Hierbei handelt es sich unter anderem um die Preßeinrichtung mit Ladekanal und Ladeeinrichtung sowie mit Binde- und Abgabeeinrichtung.

Eine vorteilhafte Weiterentwicklung der Erfindung besteht darin, daß der Grundmodul unter anderem durch Anbau eines Steuer- und Antriebmoduls, bestehend aus Zusatzteilen, wie Fahrerhaus, angetriebene Vorderachse, schwenkbare Aufnahmeeinrichtung und deren Antriebseinrichtung und durch Anbau einer Brennkraftmaschine mit Brennstofftank zu einer selbstfahrenden Großballenpresse ausbaubar ist. Bei diesen Zusatzteilen ist weiterhin kostensparend, daß sie sich auch für den Bau von Mähdreschern und sonstigen selbstfahrenden Landmaschinen eignen.

Letzteres gilt auch für die Tragachse, die als Lenkachse ausgebildet und vom Fahrerhaus aus betätigbar ist.

Von Vorteil ist auch, daß der Grundmodul durch Anbau von Zusatzteilen, wie eine Deichsel, eine Aufsammeleinrichtung mit einer Antriebsvorrichtung zu einer gezogenen Großballenpresse ausbaubar ist. Aufgrund der geringen Anzahl der Zusatzteile ist die gezogene Ballenpresse deutlich kostengünstiger als die selbstfahrende. Dazu trägt auch eine mögliche Höheneinstellung der Aufsammeleinrichtung durch den Kraftheber an der Zugmaschine bei, wodurch unter Umständen eine eigene Höheneinstellung der Aufsammeleinrichtung entfallen kann.

Dadurch, daß die Tragachse als Einfach- oder als Doppeltragachse ausgebildet ist, wird erreicht, daß die Fertigungskosten durch Wegfall der Lenkeinrichtung gegenüber einer lenkbaren Achse gesenkt werden. Je nach Tragachse können verschiedene Radgrößen und unterschiedliche Bodendrücke verwirklicht werden.

Dadurch, daß der Grundmodul Anbaustellen zum wahlweisen Anbau sowohl des Steuer- und Antriebmoduls als auch der für die gezogene Großballenpresse erforderlichen Zusatzteile aufweist, wird eine Minimierung des Bauaufwandes am Grundmodul mit einer Minimierung des Montageaufwandes der Zusatzteile kombiniert, da die Zahl der Anbaustellen und die dazu passenden Befestigungsteile minimiert sind.

Diese Vorteile ergeben sich daraus, daß eine Anschraubfläche zum Anbau des Steuer- und Antriebmoduls oder einer Deichsel, eine Förderkanaltrennstelle zwischen der Fördereinrichtung und einem Förderkanal zum Anbau der schwenkbaren Aufnahmeeinrichtung mit Antriebseinrichtung oder zum Anbau der Aufsammeleinrichtung mit Antriebseinrichtung und ein Achsträger zum Anbau einer lenkbaren Tragachse oder einer starren Einfach- oder Doppeltragachse vorgesehen sind. Demnach haben jeweils zwei Bauteile eine gemeinsame Befestigungsstelle am Grundmodul und eine entsprechende Gegenstelle an den Bauteilen.

Wenn der Grundmodul eine Preßeinrichtung aufweist, deren Kolben vorzugsweise hydraulisch antreib- und steuerbar ist, ergeben sich besonders gleichmäßig dichte Großballen, wodurch die Durchsatzleistung der Großballenpresse hoch ist. Die Preßeinrichtung kann aber auch in bekannter Weise mechanisch mit Kurbeltrieb ausgestaltet sein.

Es hat sich als vorteilhaft gezeigt, daß der Steuer- und Antriebmodul eine erste Hydropumpe, der Grundmodul eine zweite Hydropumpe aufweist, wobei die erste Hydropumpe von der Brennkraftmaschine, die zweite Hydropumpe von der Brennkraftmaschine oder der Zapfwelle der Zugmaschine antreibbar ist. Auf diese Weise wird die Antriebsleistung der Antriebsachse von der Brennkraftmaschine erbracht. Dabei bietet der hydrostatische Fahrantrieb ein Maximum an Flexibilität bei der Wahl der Fahrgeschwindigkeit. Wird die erste Hydropumpe entsprechend groß gewählt, kann sie auch den hydraulischen Antrieb der Großballenpresse übernehmen. In diesem Fall erübrigt sich bei der selbstfahrenden Ballenpresse eine zweite Hydropumpe. Für die gezogene Großballenpresse ist zumeist nur eine Hydropumpe erforderlich. Sie wird dann von der Zapfwelle der Zugmaschine aus angetrieben. Wird aus Gründen der Gleichteile auch bei der selbstfahrenden Großballenpresse eine eigene Hydropumpe für den Grundmodul verwendet, wird diese ebenfalls von der Brennkraftmaschine aus angetrieben.

Besondere Vorteile bietet die erfindungsgemäße Ausbildung, bei der der Grundmodul ein Verteilgetriebe aufweist, welches eingangsseitig mit der Brennkraftmaschine oder mit Zapfwelle der Zugmaschine verbindbar ist und welches ausgangsseitig mit sämtlichen hydraulischen und mechanischen Verbrauchern der jeweiligen Ausführung der Großballenpresse in Wirkverbindung steht. Hier kommt als weiteres Gleichteil das Verteilergetriebe hinzu, das bei der selbstfahrenden Großballenpresse von der Brennkraftmaschine, bei der gezogenen Großballenpresse von der Zapfwelle der Zugmaschine angetrieben wird und in beiden Fällen sämtliche hydraulische (eine oder zwei Hydropumpen) und mechanische Verbraucher antreibt. Auf diese Weise wird ein Maximum an Gleichteilen zwischen den beiden Ausführungen der Großballenpresse erreicht.

Weitere Merkmale der Erfindung ergeben sich aus der folgenden Beschreibung und der Zeichnung, in der Ausführungsbeispiele der Erfindung schematisch dargestellt sind.
Es zeigen:
- Figur 1:: Grundmodul,
- Figur 2:: Zusatzteile für Selbstfahrer,
- Figur 3:: Zusatzteile für gezogene Großballenpresse,
- Figur 4:: Selbstfahrende Großballenpresse,
- Figur 5:: gezogene Großballenpresse.

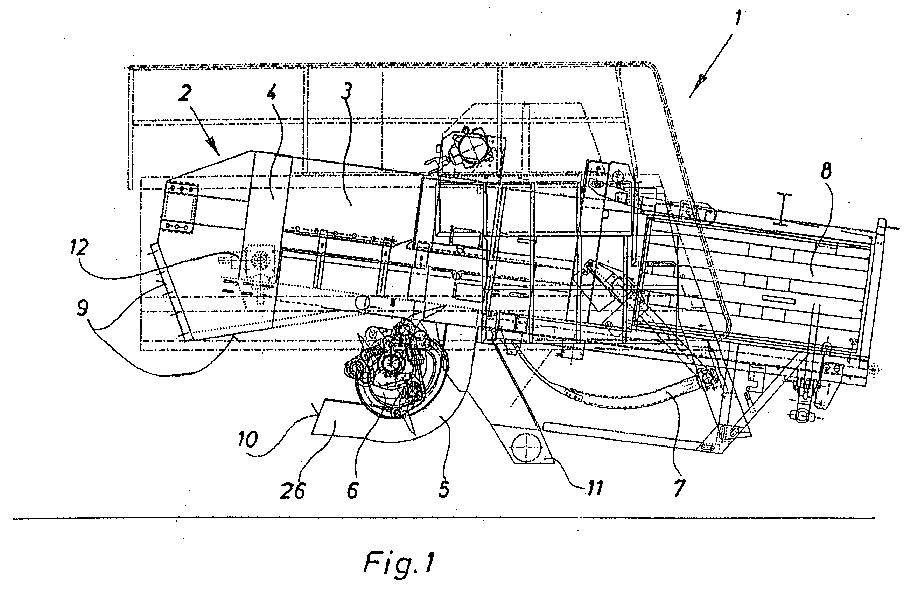

Der Grundmodul 1 der Figur 1 weist eine Preßeinrichtung 2 mit einem Preßraum 3, einem hydraulisch angetriebenen Preßkolben 4, einem Ladekanal 5 mit Ladeeinrichtung 6, eine Bindeeinrichtung 7 und eine Abgabeeinrichtung 8 auf. Außerdem sind eine Anschraubfläche 9, eine Förderkanaltrennstelle 10 und ein Achsträger 11 vorgesehen, die zum Anbau diverser, ausführungsspezifischer Zusatzteile dienen. Hinzu kommt ein Verteilgetriebe 12, dessen Funktion später erläutert wird.

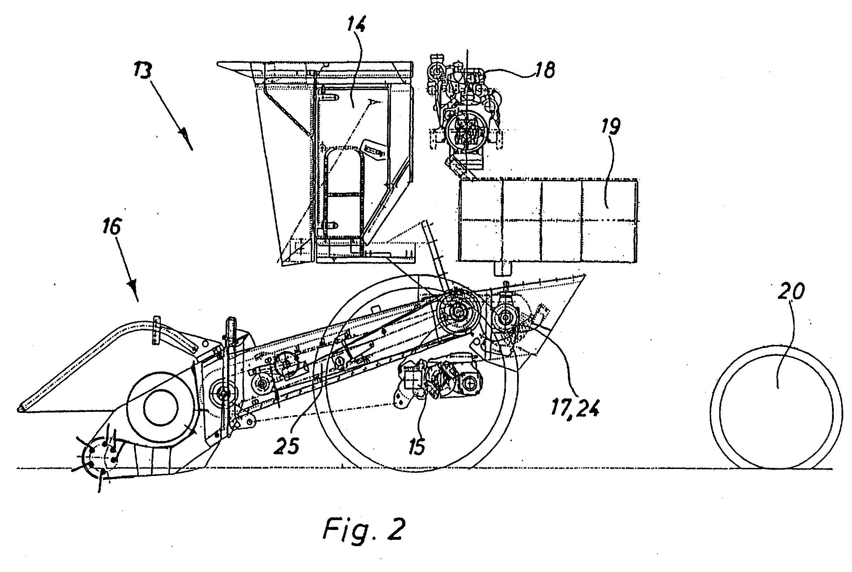

In Figur 2 sind für den Selbstfahrer erforderliche Zusatzteile, wie ein Steuer- und Antriebmodul 13 mit einem Fahrerhaus 14, eine angetriebene Vorderachse 15, eine schwenkbare Aufnahmeeinrichtung 16 und deren Antriebseinrichtung 17 sowie eine Brennkraftmaschine 18 mit einem Brennstofftank 19 und eine lenkbare Tragachse 20 dargestellt.

Der Steuer- und Antriebmodul 13 wird an die Anschraubfläche 9 geschraubt und mit der Förderkanaltrennstelle 10 verbunden. Die Brennkraftmaschine 18 und der Brennstofftank 19 werden am Grundmodul 1, die lenkbare Tragachse 20 am Achsträger 11 befestigt. Das Lenkgestänge, das die lenkbare Tragachse 20 mit dem Fahrerhaus 14 verbindet, ist nicht dargestellt. Ebenfalls nicht dargestellt sind eine vorzugsweise direkt an der Brennkraftmaschine 18 angeordnete erste und eine im Grundmodul 1 angeordnete zweite Hydropumpe, die bei der selbstfahrenden Großballenpresse von der Brennkraftmaschine 18 angetrieben werden.

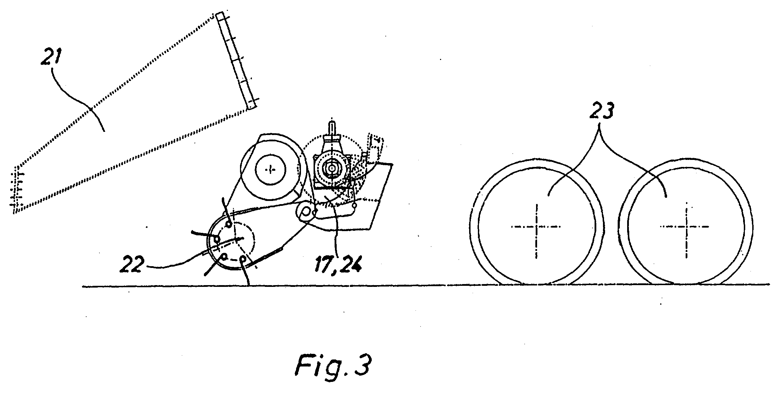

Figur 3 zeigt die für die gezogene Version erforderlichen Zusatzteile, wie eine Deichsel 21, eine Aufsammeleinrichtung 22 mit deren Antriebsvorrichtung 17 und eine Doppeltragachse 24. Die Deichsel 21 ist an der Anschraubfläche 9, die Aufsammeleinrichtung 22 mit der Antriebsvorrichtung 17 an der Förderkanaltrennstelle 10 und die Doppeltragachse 24 am Achsträger 11 befestigt. Die Aufsammeleinrichtung 22 selbst kann schwenkbar ausgeführt sein, sie kann aber auch über die Deichsel 21 von der Schlepperhydraulik bewegt werden. Die Antriebsvorrichtung 17 kann bei beiden Ausführungen der Großballenpresse identisch ausgeführt werden.

Die Preßeinrichtung 2 weist einen hydraulischen Antrieb auf, wodurch das Pressen der Großballen rasch und gleichmäßig erfolgt.

Das Verteilgetriebe 12 steht eingangsseitig bei der selbstfahrenden Großballenpresse mit der Brennkraftmaschine 18 und bei der gezogenen mit der Zapfwelle der Zugmaschine in Wirkverbindung. Von der Ausgangsseite des Verteilgetriebes 12 werden sämtliche hydraulische und mechanische Verbraucher angetrieben.

An beiden Ausführungen der Großballenpresse kann eine Schneidvorrichtung 24 vorgesehen werden, die an der Förderkanaltrennstelle 10 in Verbindung mit der Antriebseinrichtung 17 angeordnet ist.

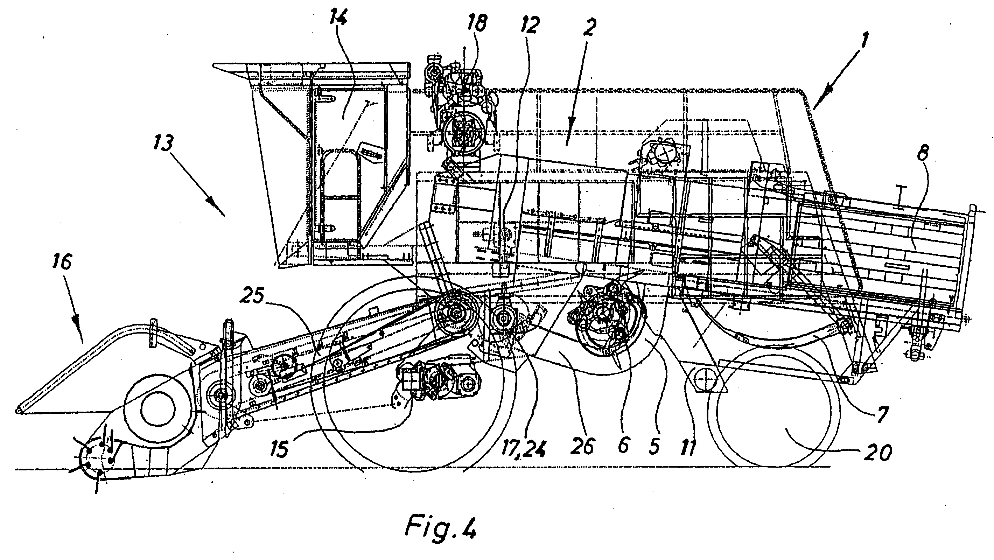

In Figur 4 ist eine selbstfahrende Großballenpresse dargestellt. Sie besteht aus dem Grundmodul 1, dem Steuer- und Antriebmodul 13, der Brennkraftmaschine 18, dem Brennstofftank 19 und der lenkbaren Tragachse 20.
Sie funktioniert folgendermaßen:
Das Erntegut wird von der schwenkbaren Aufnahmeeinrichtung 16 über eine Fördereinrichtung 25 und einen Förderkanal 26 zu einem Ladekanal 5 mit Ladeeinrichtung 6 transportiert. Die Ladeeinrichtung fördert das Erntegut in den Preßraum 3 der Preßeinrichtung 2, wo es durch den Preßkolben 4 zu einem Großballen gepreßt wird. Dieser wird von der Bindeeinrichtung 7 gebunden und über die Abgabeeinrichtung 8 abgegeben.

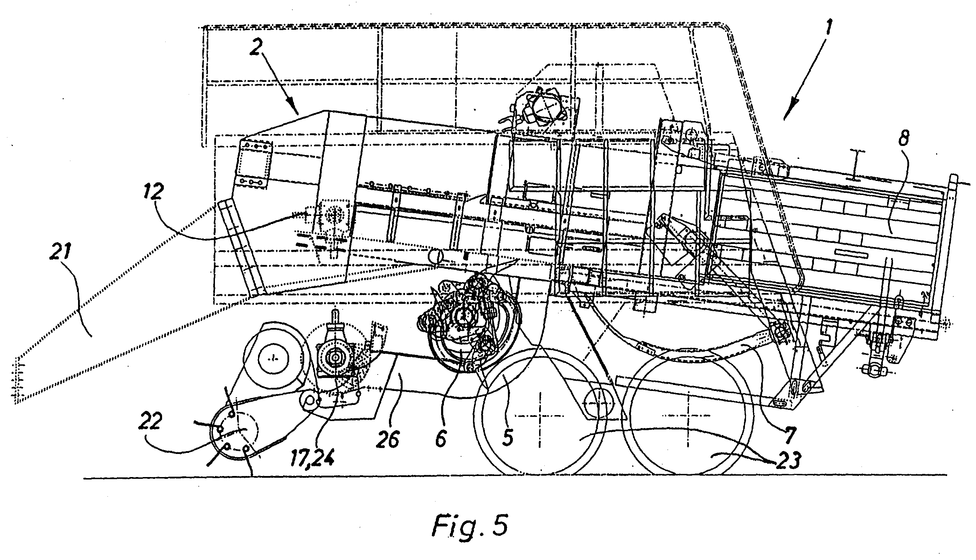

Die in Figur 5 dargestellte gezogene Großballenpresse besteht aus dem Grundmodul 1, der Deichsel 21, der Aufsammeleinrichtung 22 mit der Antriebseinrichtung 17 und der Doppeltragachse 23. Sie wird über die Deichsel 21 von einem Zugfahrzeug gezogen und von dessen Zapfwelle über das Verteilgetriebe 12 angetrieben. Das Erntegut wird von der Aufsammeleinrichtung 22 aufgenomen und zum Förderkanal 26 transportiert. Die weitere Verarbeitung des Ernteguts entspricht der selbstfahrenden Großballenpresse.

## Patentansprüche

1. Landwirtschaftliche Erntemaschine, insbesondere Großballenpresse, mit mindestens einer Tragachse und mindestens einer Aufnahme- und Preßeinrichtung, die einen Preßraum für Großballen und einen von unten in den Preßraum mündenden Ladekanal mit einer Ladeeinrichtung aufweist,
**dadurch gekennzeichnet**, daß die landwirtschaftliche Erntemaschine einen Grundmodul (1) aufweist, der durch Anbau entsprechender Zusatzteile entweder zu einer gezogenen oder zu einer selbstfahrenden Großballenpresse ausbaubar ist;

2. Landwirtschaftliche Erntemaschine nach Anspruch 1,
**dadurch gekennzeichnet**, daß der Grundmodul (1) unter anderem durch Anbau eines Steuer- und Antriebmoduls (13), bestehend aus Zusatzteilen, wie Fahrerhaus (14), angetriebene Vorderachse (15), schwenkbare Aufnahmeeinrichtung (16) und deren Antriebseinrichtung (17) und durch Anbau einer Brennkraftmaschine (18) mit Brennstofftank (19) zu einer selbstfahrenden Großballenpresse ausbaubar ist.

3. Landwirtschaftliche Erntemaschine nach Anspruch 1 oder 2,
**dadurch gekennzeichnet**, daß die Tragachse als lenkbaren Tragachse (20) ausgebildet ist, die vom Fahrerhaus (14) aus betätigbar ist.

4. Landwirtschaftliche Erntemaschine nach Anspruch 1,
**dadurch gekennzeichnet**, daß der Grundmodul (1) durch Anbau von Zusatzteilen, wie einer Deichsel (21), einer Aufsammeleinrichtung (22) mit einer Antriebsvorrichtung (17) zu einer gezogenen Großballenpresse ausbaubar ist.

5. Landwirtschaftliche Erntemaschine nach Anspruch 4,
**dadurch gekennzeichnet**, daß die Tragachse als Einfach- oder als Doppeltragachse (24) ausgebildet ist.

6. Landwirtschaftliche Erntemaschine nach einem der vorhergehenden Ansprüche,
**dadurch gekennzeichnet,** daß der Grundmodul (1) Anbaustellen zum wahlweisen Anbau sowohl des Steuer- und Antriebmoduls (13) als auch der für die gezogene Großballenpresse erforderlichen Zusatzteile aufweist.

7. Landwirtschaftliche Erntemaschine nach einem der vorhergehenden Ansprüche,
**dadurch gekennzeichnet**, daß eine Anschraubfläche (9) zum Anbau des Steuer- und Antriebmoduls (13) oder einer Deichsel (21), eine Förderkanaltrennstelle (10) zwischen einer Fördereinrichtung (25) und einem Förderkanal (26) zum Anbau der schwenkbaren Aufnahmeeinrichtung (16) mit Antriebseinrichtung (71) oder zum Anbau der Aufsammeleinrichtung (22) mit der Antriebseinrichtung (17) und ein Achsträger (11) zum Anbau einer lenkbaren Tragachse (20) oder einer starren Einfach- oder Doppeltragachse (24) vorgesehen sind.

8. Landwirtschaftliche Erntemaschine nach einem der vorhergehenden Ansprüche,
**dadurch gekennzeichnet**, daß der Grundmodul (1) eine Preßeinrichtung (2) aufweist, deren Kolben vorzugsweise hydraulisch antreib- und steuerbar ist.

9. Landwirtschaftliche Erntemaschine nach einem der vorhergehenden Ansprüche,
**dadurch gekennzeichnet**, daß der Steuer- und Antriebmodul (13) eine erste Hydropumpe, der Grundmodul (1) eine zweite Hydropumpe aufweisen, wobei die erste Hydropumpe von der Brennkraftmaschine (18), die zweite Hydropumpe von der Brennkraftmaschine (18) oder der Zapfwelle der Zugmaschine antreibbar sind.

10. Landwirtschaftliche Erntemaschine nach einem der vorhergehenden Ansprüche,
**dadurch gekennzeichnet**, daß der Grundmodul (1) ein Verteilgetriebe (12) aufweist, welches eingangsseitig mit der Brennkraftmaschine (18) oder der Zapfwelle der Zugmaschine verbindbar ist und welches ausgangsseitig mit sämtlichen hydraulischen und mechanischen Verbrauchern der jeweiligen Ausführung der Großballenpresse in Wirkverbindung steht.
